# DEMANDE DE BREVET EUROPEEN

(11) **EP 0 863 397 A1**
(43) Date de publication de la demande: **09.09.1998**
(21) Numéro de dépôt: 98420042.8
(22) Date de dépôt: 05.03.1998
(51) Int. Cl.: G01N 25/02, G01N 25/18

(54) **Dispositif de mesure des propriétés thermiques et/ou réactionnelles d'un ou plusieurs échantillons de matière**

(30) Priorité: 07.03.1997 FR 9702959
(71) Demandeur: Setaram - Société d'Etudes d'Automatisation de Régulation et d'Appareils de Mesures, 69300 Caluire (FR)
(72) Inventeur: Le Parlouer, Pierre, 69300 Caluire (FR); Daudon, Jean-Louis, 69300 Caluire (FR)
(74) Mandataire: Myon, Gérard Jean-Pierre

(57) **Abrégé**

Le dispositif de mesure des propriétés thermiques et/ou réactionnelles d'un ou plusieurs échantillons de matière solide, liquide ou gazeux comprenant une cellule de mesure (1) constituée par un composant électronique apte à déterminer une différence de températures entre deux zones (1a, 1b) de sa surface, caractérisé en ce qu'il comprend un bloc d'inertie thermique (2) définissant une chambre intérieure (3) dans laquelle est disposée ladite cellule de mesure, ledit bloc étant pourvu d'une ouverture (6) disposée au-dessus de ladite cellule de mesure et d'une jupe (4) entourant ladite chambre, ladite jupe s'étendant verticalement vers le bas jusqu'à une surface d'appui (5a) sensiblement horizontale.

## Description

L'invention a trait à un dispositif de mesure des propriétés thermiques et/ou réactionnelles d'un ou plusieurs échantillons de matière. Les propriétés thermiques et/ou réactionnelles d'une matière sont matérialisées par un flux de chaleur entrant ou sortant d'un échantillon dans des conditions données.

Les dispositifs de ce type connus de l'art antérieur sont le plus souvent des appareils complexes, lourds, volumineux, qui doivent être utilisés exclusivement en laboratoire car ils ne peuvent pas être déplacés facilement et dont le coût est important. Par ailleurs, le volume de la chambre de mesure de ces dispositifs et le temps de réaction des cellules utilisées induisent une inertie thermique importante de ces dispositifs, de sorte qu'une enceinte isotherme de haute qualité doit leur être associée. Ceci majore d'autant les coûts de ces dispositifs et augmente leurs dimensions.

Par ailleurs, on connaît de la demande de brevet WO 91/02229, une cellule de mesure de la différence de températures entre deux zones de sa surface qui est susceptible d'être utilisée dans un dispositif de mesure des propriétés thermiques d'un échantillon de matière. Cependant, une cellule de ce type est fragile et ne peut être utilisée telle quelle sans risquer d'être détériorée par les manipulations nécessaires à la mise en place et au retrait d'un échantillon. En outre, elle doit être associée à un circuit électronique de commande et son branchement et sa déconnexion doivent demeurer possibles, en particulier pour un échange des composants ou pour des opérations de maintenance préventives. Cette cellule peut fonctionner dans une atmosphère libre, mais les mesures qu'elle effectue alors sont faussées par les perturbations dues à l'atmosphère ambiante.

L'invention vise à résoudre l'ensemble de ces problèmes et à proposer un dispositif de mesure des propriétés thermiques et réactionnelles d'échantillons de matière utilisant une cellule du type mentionné et permettant l'isolation thermique de celle-ci par rapport à l'atmosphère extérieure, sa protection mécanique et un accès à celle-ci et au circuit électronique de commande ou de détection lorsque cela est nécessaire. Un autre but de l'invention est de réaliser un dispositif de mesure compact, ce qui permet, en particulier, de prévoir qu'il soit mobile, autonome et puisse être déplacé sur site en fonction des mesures à effectuer. Ce caractère compact induit aussi des performances économiques améliorées.

Dans cet esprit, l'invention concerne un dispositif de mesure des propriétés thermiques et réactionnelles d'un ou plusieurs échantillons de matière solide, liquide ou gazeuse comprenant une cellule de mesure, constitué par un composant électronique apte à déterminer une différence de températures entre deux zones de sa surface, caractérisé en ce qu'il comprend un bloc d'inertie thermique définissant une chambre intérieure dans laquelle est disposée ladite cellule de mesure, ledit bloc étant pourvu d'une ouverture disposée au-dessus de ladite cellule de mesure, d'une jupe entourant ladite chambre, ladite jupe s'étendant verticalement vers le bas jusqu'à une surface d'appui sensiblement horizontale.

Grâce à l'invention, la cellule de mesure est enveloppée par le bloc d'isolation thermique qui la protège mécaniquement et l'isole thermiquement. L'ouverture disposée au-dessus de la cellule permet de disposer sur la surface supérieure de celle-ci un échantillon de matière dont les propriétés thermiques doivent être mesurées.

Selon un premier aspect avantageux de l'invention, le bloc d'inertie thermique est réalisé en métal tel que, notamment, en aluminium. Les bonnes propriétés d'usinage, la densité relativement faible de ce métal et son coût abordable permettent d'obtenir un bloc relativement léger assurant efficacement la fonction souhaitée avec un prix de revient faible.

Selon une autre variante avantageuse de l'invention, le dispositif comprend un obturateur de l'ouverture, cet obturateur étant pourvu d'un canal central d'introduction de l'échantillon. Ainsi, un échantillon peut être mis en place alors que l'obturateur ferme l'ouverture, de sorte qu'un accès direct à la cellule de mesure n'est pas possible et que celle-ci est protégée contre toute fausse manipulation et qu'aucun flux d'air externe n'est susceptible de perturber la mesure. En revanche, lorsqu'il est nécessaire d'accéder à la cellule pour la nettoyer, l'obturateur peut être extrait de l'ouverture et, en prenant les précautions nécessaires, il est possible de travailler sur la cellule de mesure.

Selon un mode de réalisation avantageux de l'invention, le dispositif comprend un manchon tubulaire disposé sur la cellule de mesure et apte à recevoir un creuset contenant l'échantillon. Ceci contribue à une mise en place précise du creuset contenant l'échantillon, en particulier lorsque celui-ci est sous forme liquide.

Selon un autre aspect particulièrement avantageux de l'invention, le dispositif comprend au moins un élément à effet Peltier disposé à proximité de la cellule de mesure dans la chambre intérieure. L'ajustement de la température de la cellule de mesure et/ou de ladite chambre est obtenu grâce à cet élément à effet Peltier. Cette caractéristique de l'invention permet d'adapter la température de la mesure au domaine de températures souhaité et, en particulier, d'effectuer des mesures sur une gamme de températures prédéterminée.

Selon un autre aspect avantageux de l'invention, la cellule de mesure est supportée par un moyen élastique de rappel en direction de l'ouverture. Cet aspect de l'invention permet un positionnement précis de la cellule à l'intérieur de la chambre, tout en lui laissant un degré de liberté en cas de dilatation et en assurant un contact thermique intime avec un éventuel élément de contrôle de température, tel qu'un élément à effet Peltier.

Selon un autre aspect avantageux de l'invention, le dispositif comprend un élément massif muni d'ailettes formant surface d'échange thermique. Ainsi, l'inertie thermique de l'ensemble du dispositif peut être réduite. La température de cet élément reste donc proche de la température ambiante quel que soit le flux thermique échangé à travers cet élément massique, ce qui autorise un contrôle efficace de la cellule de mesure sur une large plage de températures. En effet, quelle que soit la température au niveau de la cellule, le bloc massique constitue un élément de référence dont la température peut être, au moins en première approximation, considérée comme constante.

Selon un autre aspect avantageux de l'invention, la surface d'appui horizontale sur laquelle repose le bloc d'inertie thermique est percée d'au moins un orifice de communication entre la chambre intérieure et l'extérieur. Cet orifice peut avantageusement être utilisé pour accéder à la cellule de mesure et/ou à un circuit électronique de commande associé.

Selon une variante avantageuse de l'invention, la cellule est apte à déterminer la masse ou une variation de masse de l'échantillon. Ceci permet de compléter la portée de l'étude de l'échantillon.

L'invention sera mieux comprise et d'autres avantages de celle-ci apparaîtront plus clairement à la lumière de la description qui va suivre de deux modes de réalisation d'un dispositif de mesure des propriétés thermiques d'un échantillon de matière conforme à son principe, donnée uniquement à titre d'exemple et faite en référence aux dessins annexés dans lesquels :
- la figure 1 est une vue en coupe transversale d'un dispositif de mesure conforme à un premier mode de réalisation de l'invention et
- la figure 2 est une vue analogue à la figure 1 pour un dispositif conforme à un second mode de réalisation de l'invention.

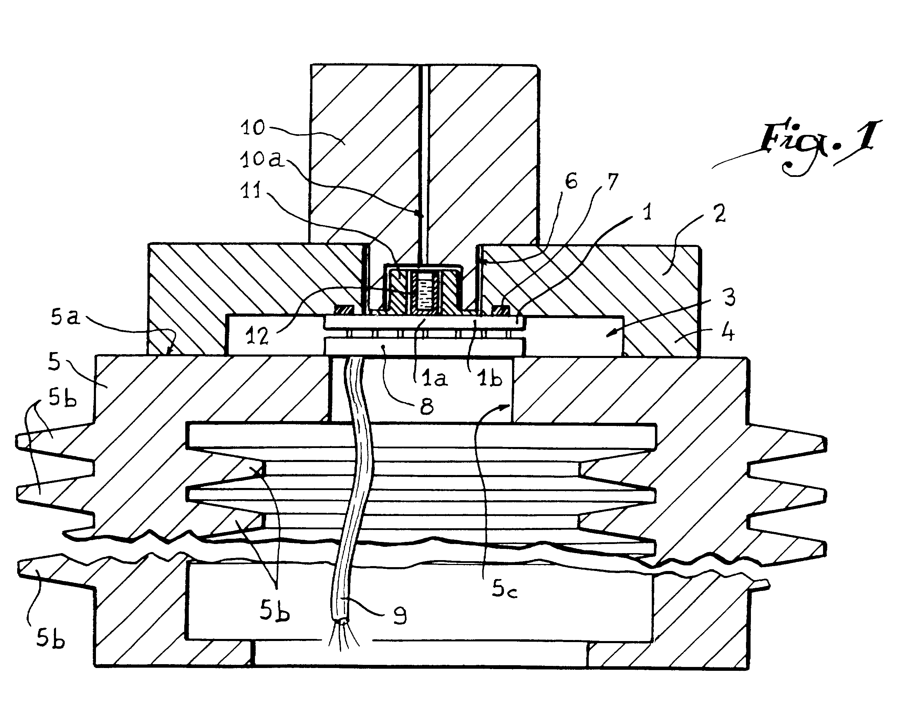

Le dispositif de la figure 1 comprend une cellule de mesure 1 constituée par un composant électronique, apte à déterminer une différence de températures entre sa zone centrale 1a et une zone périphérique 1b. La cellule 1 peut, par exemple mais pas obligatoirement, être du type décrit dans la demande de brevet WO-A-91/02229. Il peut s'agir d'une cellule de mesure différentielle, c'est-à-dire symétrique, ou absolue, c'est-à-dire disymétrique.

Conformément à l'invention, un bloc d'inertie thermique 2 définit une chambre intérieure 3 dans laquelle est disposée la cellule 1. Le bloc 2 comprend une jupe annulaire externe 4 entourant la chambre 3 et s'étendant verticalement vers le bas jusqu'à une surface d'appui 5a sensiblement horizontale appartenant à un radiateur 5 muni d'ailettes 5b d'échange thermique. Une ouverture 6 est ménagée dans le bloc 2 au-dessus de la cellule 1. Cette ouverture permet d'accéder à la surface supérieure de la cellule 1. Un joint 7, tel que par exemple un joint torique, est disposé dans une gorge annulaire d'une face du bloc 2 orientée vers la cellule 1 et a pour fonction d'isoler la chambre 3 de l'ouverture 6 et, notamment, d'empêcher la circulation d'un courant d'air de la chambre 3 vers la surface supérieure de la zone centrale 1a de la cellule 1.

Le bloc 2 et le radiateur 5 sont réalisés en aluminium ou dans un autre métal non ferreux, ce qui leur confère de bonnes propriétés thermiques et un caractère usinable et relativement bon marché. Un circuit électronique 8 est associé à la cellule 1 et sert à son alimentation en énergie et à son dialogue avec un contrôleur disposé à l'extérieur. Un faisceau de câbles 9 traverse un orifice de communication 5c percé dans la surface supérieure 5a du radiateur 5, cet orifice mettant en communication la chambre 3 et l'atmosphère ambiante.

La cellule 1 est mise en place avant que le bloc 2 ne soit posé sur la surface 5a. En cas d'intervention sur la cellule, le bloc 2 est aisément retiré.

Un obturateur 10 est dimensionné de façon à fermer l'ouverture 6 en reposant sur le bloc 2. Cet obturateur est pourvu d'un canal central 10a permettant l'introduction de l'échantillon de matière dont les propriétés thermiques doivent être mesurées alors que l'obturateur est en place. Ceci permet de réaliser les mesures sans perturbation et en protégeant la cellule 1 contre toute mauvaise manipulation. L'échantillon peut être introduit au-dessus de la cellule 1 à travers le canal 10a au moyen d'une aiguille associée à une seringue ou par tout autre moyen équivalent, tel qu'un tube capillaire.

Un manchon tubulaire 11 est disposé sur la cellule 1 et est apte à recevoir un creuset 12 dans lequel est disposé l'échantillon de matière.

Le fonctionnement est le suivant : avant de réaliser la mesure, le manchon 11 et le creuset 12 sont posés sur la surface supérieure de la cellule 1. L'obturateur 10 est alors mis en place, puis l'échantillon de matière à analyser est injecté dans le creuset 12. Lorsque les opérations de mesure sont terminées, l'obturateur 10 peut être dégagé afin de permettre la récupération du creuset 12. Il est à noter que grâce à la présence du creuset 12, la surface supérieure de la cellule de mesure 1 n'est pas souillée par l'échantillon de produit à analyser. Par ailleurs, l'utilisation du manchon 11 n'est pas obligatoire, en particulier si la géométrie du creuset 12 lui confère un bon positionnement.

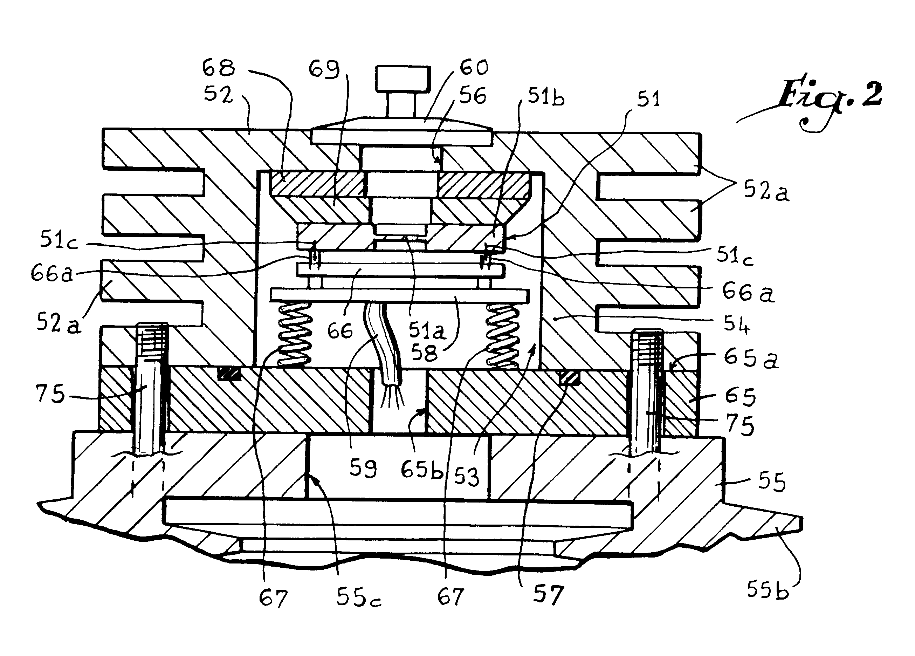

Dans le second mode de réalisation de l'invention représenté à la figure 2, les éléments analogues à ceux du mode de réalisation de la figure 1 portent des références identiques augmentées de 50. Dans ce mode de réalisation, une cellule de mesure 51 est disposée à l'intérieur d'une chambre 53 définie par un bloc d'inertie thermique 52 comprenant une jupe annulaire externe 54 s'étendant verticalement vers le bas en direction d'une surface d'appui 65a sensiblement horizontale appartenant à une plaque 65 reposant sur un radiateur 55 muni d'ailettes 55b. Le bloc 52 est lui aussi muni d'ailettes 52a, ce qui facilite les échanges thermiques avec l'atmosphère ambiante.

Des vis 75 permettent de solidariser le bloc 52 du radiateur 55 et de la plaque 65. Ceci permet de déplacer l'ensemble du dispositif en un bloc, par exemple sur un site de mesure. Lorsqu'on souhaite mettre en place la cellule 51 ou les dispositifs électroniques associés, ou intervenir sur celle-ci ou ceux-ci, les vis 75 sont desserrées et le bloc 52 est oté de la plaque 65.

Une ouverture 56 est prévue dans le bloc 52 au-dessus de la cellule 51, alors qu'un obturateur 60 est apte à fermer l'ouverture 56. La cellule 51 est associée à un circuit électronique de commande 58 alors qu'un support 66 est disposé entre la cellule 51 et le circuit 58. Ce support 66 est muni de broches femelles 66a aptes à coopérer avec des broches mâles 51c appartenant à la cellule 51. Comme précédemment, la cellule 51 est apte à mesurer une différence de températures entre une zone centrale 51a et une zone périphérique 51b de sa face supérieure. Grâce à l'invention, la cellule 51, qui est fragile, est efficacement protégée par le bloc 52 à la fois sur le plan thermique et sur le plan mécanique.

Des ressorts 67 sont logés entre le circuit 58 et la surface d'appui 65a appartenant à la plaque 65 en étant légèrement comprimés, de telle sorte qu'ils constituent un moyen de rappel élastique du circuit 58 et des éléments qu'il supporte, donc en particulier de la cellule 51, en direction de l'ouverture 56. Grâce à cet aspect de l'invention, la cellule 51 est en permanence disposée à proximité de l'ouverture 56. La fonction des ressorts 67 pourrait aussi être réalisée par un unique ressort de compression dont le diamètre serait sensiblement égal à la dimension transversale du circuit 58 et qui serait disposé entre ce circuit et la surface 65a.

La plaque 65 est percée d'orifices dont un seul 65b est visible à la figure 2, permettant le passage d'un faisceau de câbles 59 entre la chambre 53 et l'extérieur, en coopération avec un orifice 55c du radiateur 55.

Selon un aspect avantageux de l'invention, un élément à effet Peltier 68 est disposé dans la chambre 53 à proximité de la cellule 51 et permet d'ajuster la température de la cellule et/ou de la chambre 53 en fonction des besoins de la campagne de mesures en cours. Un bloc-thermostat 69 est avantageusement pris en sandwich entre l'élément 68 et la cellule 51 de façon à constituer un élément de régulation contrôlant l'alimentation électrique de l'élément 68 à effet Peltier. On rappelle qu'un élément à effet Peltier est un composant électronique qui, étant alimenté électriquement, produit un effet thermique tel qu'une de ses faces voit sa température augmenter alors que l'autre voit sa température diminuer en fonction du sens de circulation du courant. Cet élément permet donc, au choix de l'utilisateur et en fonction du sens du courant avec lequel il est alimenté, de chauffer ou de refroidir la cellule 51 et/ou la chambre 53. L'élément 68 est disposé au contact du bloc 52, de sorte qu'un échange thermique direct peut avoir lieu entre ces deux pièces et que les calories éventuellement générées ou absorbées par l'élément 68 peuvent être échangées par le bloc 52 avec l'atmosphère ambiante grâce aux ailettes 52a. Même si le bloc 52 n'est pas muni d'ailettes, il est en contact indirect avec le radiateur 55 et l'échange thermique peut aussi avoir lieu à travers ce radiateur.

Selon un mode de réalisation non représenté de l'invention, les broches mâles de la cellule 51 peuvent être prévues sur la périphérie de celle-ci et s'étendre horizontalement, les broches femelles correspondantes du support 66 étant prévues horizontales. Il est alors possible de disposer un second élément à effet Peltier sous la cellule 51, ce qui améliore les performances thermiques et le temps de réponse du dispositif.

Les deux dispositifs représentés ont l'avantage d'être très compacts, faciles à déplacer et de faible consommation électrique, de sorte qu'ils peuvent être utilisés en dehors d'un laboratoire, en particulier sur un site de mesures. Ils peuvent être associés, grâce aux faisceaux 9 et 59, à une unité de contrôle telle qu'un ordinateur portable, ce qui garantit une bonne facilité d'utilisation.

En outre, compte tenu des faibles masses mises en jeu et du temps de réponse rapide de la cellule utilisée, le dispositif peut être utilisé sans être confiné dans une enceinte isotherme, ce qui maintient son prix de revient à un niveau très compétitif et permet son faible volume.

Selon une variante avantageuse et non représentée de l'invention, on peut prévoir que l'orifice 5c ou 65b et obturé par un bouchon qui permet le passage du faisceau de câbles 9 ou 59. Ce bouchon permet de parfaire l'isolation de la chambre 3 ou 53 par rapport à l'atmosphère ambiante.

Le dispositif est utilisable indépendamment de la nature du matériau dont on mesure les propriétés thermiques, qu'il soit solide, liquide ou gazeux. Le dispositif peut également être utilisé pour mesurer simultanément les propriétés de plusieurs échantillons disposés côte à côte sur la cellule.

Selon une variante non représentée de l'invention, la cellule de mesure peut être apte à déterminer la masse ou une variation de masse de l'échantillon. En effet, la masse d'un échantillon est l'une de ses caractéristiques réactionnelle dans la mesure où elle influe sur une réaction physico-chimique et où une telle réaction peut conduire à la variation de cette masse. La mesure de masse peut être réalisée toute méthode appropriée et, notamment, par mesure d'une énergie utilisée pour équilibrer un système mécanique supportant la cellule.

## Revendications

1. Dispositif de mesure des propriétés thermiques et/ou réactionnelles d'un ou plusieurs échantillons de matière solide, liquide ou gazeux comprenant une cellule de mesure (1, 51) constituée par un composant électronique apte à déterminer une différence de températures entre deux zones (1a-1b, 51a-51b) de sa surface, caractérisé en ce qu'il comprend un bloc d'inertie thermique (2, 52) définissant une chambre intérieure (3, 53) dans laquelle est disposée ladite cellule de mesure, ledit bloc étant pourvu d'une ouverture (6, 56) disposée au-dessus de ladite cellule de mesure et d'une jupe (4, 54) entourant ladite chambre, ladite jupe s'étendant verticalement vers le bas jusqu'à une surface d'appui (5a, 65a) sensiblement horizontale.

2. Dispositif de mesure selon la revendication 1, caractérisé en ce que ledit bloc (2, 52) est réalisé en métal tel que, notamment, en aluminium.

3. Dispositif de mesure selon la revendication 1, caractérisé en ce qu'il comprend un obturateur (10) de ladite ouverture (6), ledit obturateur étant pourvu d'un canal central (10a) d'introduction dudit échantillon.

4. Dispositif de mesure selon la revendication 1, caractérisé en ce qu'il comprend un manchon tubulaire (11) disposé sur ladite cellule de mesure (1) et apte à recevoir un creuset (12) contenant ledit échantillon.

5. Dispositif de mesure selon la revendication 1, caractérisé en ce qu'il comprend au moins un élément à effet Peltier (68), ledit élément étant disposé à proximité de ladite cellule de mesure (51) dans ladite chambre intérieure (53).

6. Dispositif de mesure selon la revendication 1, caractérisé en ce que ladite cellule de mesure (51) est supportée par un moyen élastique de rappel (67) en direction de ladite ouverture (56).

7. Dispositif de mesure selon la revendication 6, caractérisé en ce que ledit moyen de rappel élastique comprend au moins un ressort (67) de compression logé entre un circuit imprimé (58), associé à ladite cellule de mesure et supportant celle-ci, et ladite surface d'appui (65a) sensiblement horizontale.

8. Dispositif de mesure selon la revendication 1, caractérisé en ce qu'il comprend un élément massif (5, 55, 52) muni d'ailettes (5b, 55b, 52a) formant surfaces d'échange thermique.

9. Dispositif de mesures selon la revendication 1, caractérisé en ce que ladite surface d'appui horizontale (5a, 65a) est percée d'au moins un orifice de communication (5c, 65b) entre ladite chambre intérieure (3, 53) et l'extérieur.

10. Dispositif de mesure selon la revendication 9, caractérisé en ce qu'un faisceau (9, 59) de câbles d'alimentation électrique et de contrôle de ladite cellule (1, 51) traverse ledit orifice de communication (5c, 65b).

11. Dispositif de mesure selon l'une des revendications précédentes, caractérisé en ce que ladite cellule (1, 51) est apte à déterminer la masse ou une variation de masse dudit échantillon.
